# EUROPEAN PATENT SPECIFICATION

(11) **EP 2 290 502 B1**
(45) Date of publication and mention of the grant of the patent: **01.11.2017**
(21) Application number: 09010861.4
(22) Date of filing: 25.08.2009
(51) Int. Cl.: G06F 3/02, G06F 3/023

(54) **Control method and control system utilizing the same**
Steuerungsverfahren und Steuerungssystem damit
Procédé de contrôle et système de contrôle l'utilisant

(43) Date of publication of application: 02.03.2011
(73) Proprietor: Giga-Byte Technology Co., Ltd., New Taipei City 231 (TW)
(72) Inventor: Lin, Chih-Hao, Taipei Hsien (TW)
(74) Representative: Becker Kurig Straus

(56) References cited:
- WO-A-2007/093933
- US-A1- 2004 183 783
- US-A1- 2006 209 014
- MATIAS EDGAR ET AL: "Half-QWERTY: A one-handed keyboard facilitating skill transfer from QWERTY" INTERCHI '93, [Online] April 1993 (1993-04), pages 88-94, XP002567269 ACM Retrieved from the Internet: URL:http://delivery.acm.org/10.1145/170000 /169097/p88-matias.pdf?key1=169097&key2=45 28265621&coll=GUIDE&dl=GUIDE&CFID=75296586 &CFTOKEN=79419808> [retrieved on 2010-02-08]
- TREWIN S ET AL: "A study of two keyboard aids to accessibility" PEOPLE AND COMPUTERS XIII: PROCEEDINGS OF HCI '98,, 1 January 1998 (1998-01-01), pages 83-97, XP009128905 ISBN: 978-3-540-76261-4
- "DESIGNING AROUND" MACHINE DESIGN, PENTON MEDIA, CLEVELAND, OH, US, vol. 65, no. 22, 12 November 1992 (1992-11-12), pages 60-65, XP000329390 ISSN: 0024-9114

## Description

### BACKGROUND

### 1. Field of the Invention

The present invention generally relates to control systems, and more particularly to a control system of a hot key with a function combination.

### 2. Description of Prior Art

Nowadays, a computer becomes to be a necessary tool for our works or daily lives. Take an operation system as an example, the human-computer interface of an early DOS system is not friendly, because for beginners, it's too difficult to cross the access threshold. When windows system is published, the access threshold and confusion are eliminated. Generally, a use operates the windows system with a mouse. However, if operate the windows system according to an original process, work efficiency may be affected. For example, in windows system, when a user uses the mouse to adjust some functions such as speaker volume and screen brightness, many windows need to be opened before the function is adjusted.

In the art, varies control method for executing desired service process is utilized by the combination of a hot key with a function key.

"Half-QWERTY: A one-handed keyboard facilitating skill transfer from QWERTY", INTERCHI '93 (Matias Edgar et al) discloses a one-handed typing technique, in which modifier keys (such as shift and control) are supported via a "latch" mechanism, commonly known as "Sticky Keys". As long as the shift or control key is pressed, the key is virtual latched, and the other keys are altered to input alternative characters. "A study of two keyboard aids to accessibility", PEOPLE AND COMPUTERS XIII: PROCEEDINGS OF HCI '98" 1 January 1998 (Trewin S et al) discloses another "Sticky Keys" technique.

U.S. patent publication US 2006/0209014 discloses a system and method in which pen gestures cause a mode to be entered in which a computing device acts as if a modifier key (e.g. Control, Alt. or Shift) was being pressed.

U.S. patent publication US 2004/0183783 and PCT application WO 2007/093933 disclose the effects of pressing the FN key together with a function key to trigger or activated a desired process.

### BRIEF SUMMARY

A control method is proposed in accordance to appended independent claim 1 and a control system is proposed in accordance to appended independent claim 5. Embodiments are described in the appended dependent claims.

### BRIEF DESCRIPTION OF THE DRAWINGS

These and other features and advantages of the various embodiments disclosed herein will be better understood with respect to the following description and drawings, in which like numbers refer to like parts throughout, and in which:
Fig. 1 shows a control method in accordance with an exemplary embodiment of the invention;
FIG. 2 shows a control method according to another exemplary embodiment of the invention;
FIGS. 3A and 3B show an exemplary embodiment of a controller obtaining a key code;
FIG. 3C shows another exemplary embodiment of a controller obtaining a key code;
Fig. 4 is a schematic view of a control system in accordance with an exemplary embodiment of present invention.

### DETAILED DESCRIPTION

When a user presses at least one hot key and at least one function key, a service process corresponding to the pressed hot key and function key can be activated. Thus, operation time is saved.

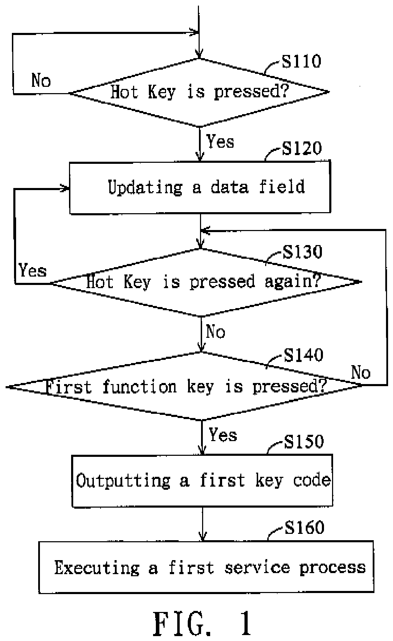

FIG.1 shows a control method in accordance with an exemplary embodiment of the invention. First, in step S110, judge if a hot key should be pressed. In the embodiment, the hot key includes the keys such as Alt, Ctrl, Fn, Shift, and so on. When one of the keys is pressed singly, there is no response and nothing is triggered.

Generally, when one key on the keyboard is pressed, the keyboard should output a corresponding scan signal. In the embodiment, a controller receives the scan signal from the keyboard, and judges which key is pressed according to the scan signal provided by the controller. In another embodiment, the controller is a keyboard controller (KBC) or an embedded controller (EC).

In step S120, when a hot key is pressed, a data in a data field is updated. In the embodiment, when the controller receives a hot key scan signal from the keyboard, controller updates the data in a data field. An exemplary original data of the data field is 0.

Go to step S130, judge if the hot key should be pressed again. If the hot key is pressed again, return to step S120, update the data of the data field again. In the embodiment, the data in the data field represents the times that the hot key has been pressed. In the invention, the pressed times of the hot key is not limited. Different times of the hot key has been pressed should cause different response. In another embodiment, step 130 can be omitted.

Go to step S140, judge if a first function key should be pressed. The type of the first function key is not limited in the invention. In the embodiment, the function key represents the keys that when being pressed singly, there is response and a function is triggered. For example, the function key can be number keys, letter keys, or the keys through F1 to F12. In another embodiment, the user can choose press or release the hot key according to his/her habit. Therefore, when the first function key is pressed, the hot key may be pressed or released.

When the first function key is not pressed, return to step S130. When the first function key has been pressed, go to step S150, a first key code is output according to the data in the data field and the command represented by the first function. In the embodiment, the controller (e.g., KBC or EC) that receives the scan signal from the keyboard may output a first key code after both the hot key and the first function key are pressed. However, the controller should not output any key code, when only the scan signal of the hot key is received. The controller can output the first key code until the function keys is pressed completely. Of course, it is not always only one function key is pressed.

In one feasible embodiment, take an example, the user want to activate a first service process, and the combination keys corresponding to the first service process are a hot key Fn and a function key F1, the controller may output the key code corresponding to the first service process after the hot key Fn and the function key F1 are both pressed.

In addition, take another example, if the combination keys corresponding to the first service process are a hot key Fn and two function keys (number keys 1 and 2), the controller may output the key code corresponding to the first service process after the hot key Fn and the two function keys (number keys 1 and 2) are all pressed.

Go to step 160, a first service process is executed according to the first key code. In the embodiment, when the controller output the first key code, a terminal unit (e.g., a south-bridge chip) executes the first service process according to the first key code. In one feasible embodiment, the terminal unit sends an interrupt command to interrupt a currently executed process. In the interrupt period, a processing system executes the first service process. The interrupted process should continue when the first service process is completed.

The type of the interrupt command is not limited in the invention. In some feasible embodiments, the interrupt command sent by the terminal unit can be system control interrupt (SCI), system management interrupt or interrupt request (IRQ).

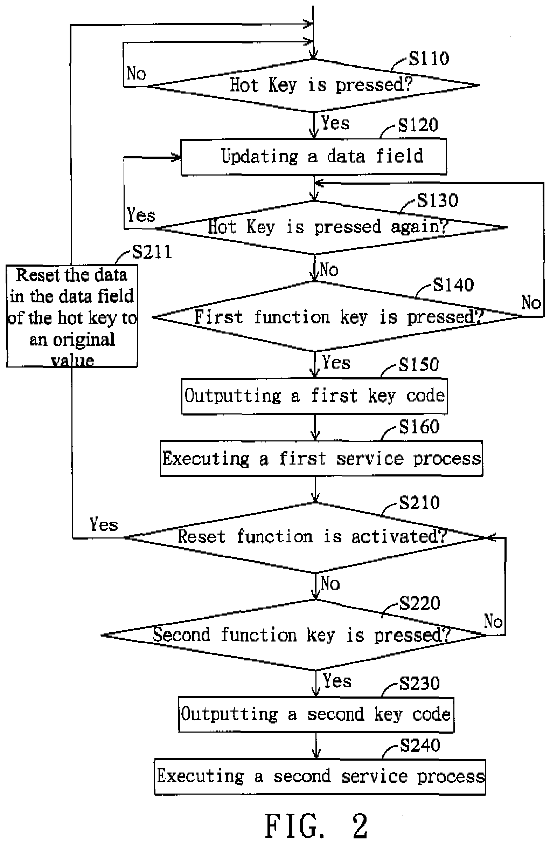

FIG. 2 shows a control method in accordance with another exemplary embodiment of the invention. Compared with FIG. 1, FIG. 2 has additional steps S210-S240. The steps S110-S160 shown in FIG.2 are same with the steps S110-S160 shown in FIG. 1, which have been introduced above. In step S210, judge if a reset function is activated. If the reset function is activated, go to step S211, reset the data in the data field of the hot key to be the original value, and then go to step S110.

The user can decide that whether the reset function be activated or not. In a feasible embodiment, the user can decide if activate the reset function in the function options of BIOS. If the reset function is not activated, go to step S220, judge that if a second function key should be pressed. The second function key can be a number key, a letter key or the key through F1 to F12.

If the second function key is not pressed, return to step 210. When the second function key is pressed, go to step S230, a second key code is output according to the data in the data field and the second function key.

In the embodiment, the reset function is inactivated, thus, the data in the data field is saved, and the controller can output the second key code according to the data in the data field and the pressed second function key.

Take an example, when the reset function is inactivated, if the user presses the hot key Fn and function keys F1 and F2, the controller can output two key codes, wherein one key code corresponds to the hot key Fn and the function key F1, that is, Fn+F1; the other key code corresponds to the hot key Fn and the function key F2, that is, Fn+F2. According to the two key codes, the processing system executes two service processes, such as adjusting screen brightness or adjusting the speaker volume. Therefore, in this embodiment, the user can obtain a required result without pressing the hot key again.

If the reset function is activated, when the user presses the hot key Fn and function keys F1, F2, controller only output one key code corresponding to Fn+F1. Thus, the processing system executes only one service process. To the pressed function F2, the processing system may execute the function of the single function key F2, such as save, reset, and so on.

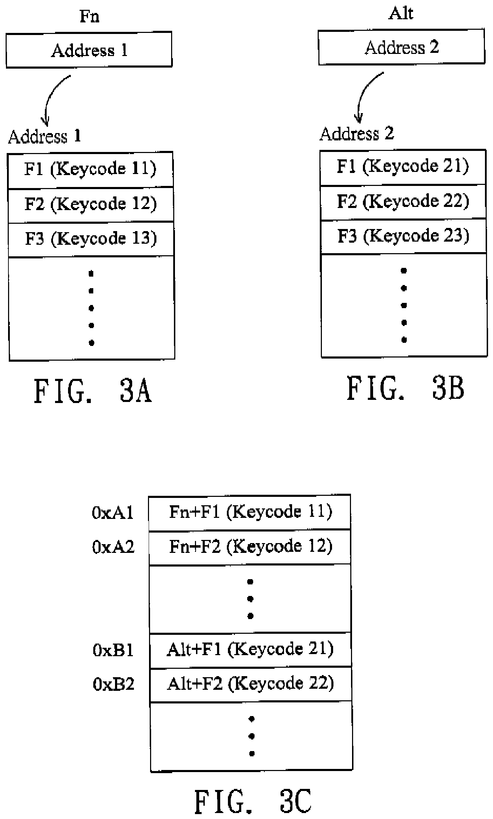

FIGS. 3A and 3B show an exemplary feasible embodiment of a controller obtaining a key code. Referring to FIG. 3A, when the hot key Fn is pressed, the process should skip to address 1. Next, when the function key F1 is pressed, the controller can obtain that the combination of the hot key Fn and the function key F1 corresponds to a key code of keycode 11. Similarly, when the hot key Fn is pressed, if the function key F2 is also pressed, the controller can obtain that the combination of the hot key Fn and the function key F2 corresponds to a key code of keycode 12. In addition, the other key combinations go on like this.

FIG. 3B shows the relationship of the combination of the hot key Alt and function keys. When the hot key Alt is pressed, the process should skip to address 2. Next, when the function key F2 is pressed, the controller can obtain that the combination of the hot key Alt and the function key F2 corresponds to a key code of keycode 22.

FIG. 3C shows another feasible embodiment of a controller obtaining a key code. When the hot key Fn and the function key F1 are pressed in order, the process skips to address 0xA1, thus, the key code of keycode 12 is obtained. Similarly, when the hot key Alt and the function key F1 are pressed in order, the process skips to address 0xB1, thus, the key code of keycode 21 is obtained.

From FIGS. 3A to 3C, the process can search a corresponding key code in a key code table shown in FIG. 3C after the hot key and the function both are pressed; the process also can search a corresponding key code table shown in FIGS. 3A and 3B when the hot key is pressed.

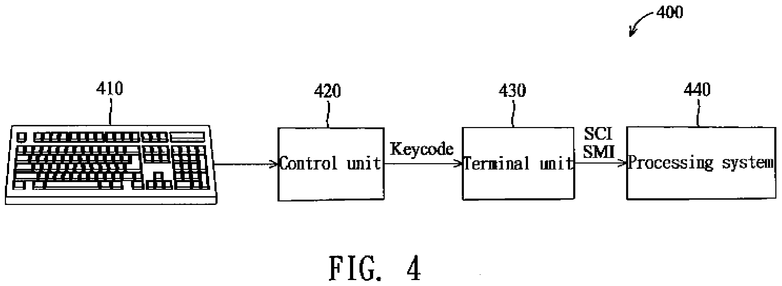

Fig. 4 shows a schematic view of a control system of an embodiment. The control system 400 includes a keyboard 410, a control unit 420, a terminal unit 430 and a processing system 440. The keyboard 410 includes a hot key and a first function key. When the hot key is pressed, the keyboard 410 outputs a hot key scan signal to the control unit 420. When the first function key is pressed, the keyboard 410 outputs a first function key scan signal to the control unit 420.

The type of the hot key and the function key is not limited in the invention. In the embodiment, the hot key includes keys that when pressed singly, there is no response and nothing is triggered. Reversely, the function key represents the keys that when being pressed singly, there is response and a function is triggered, such as numbers or letters appear on the screen.

For example, the hot key can be on of the keys including Alt, Ctrl, Fn, Shift, and so on. The function key can be number keys, letter keys, or the keys through F1 to F12. In addition, it is not limited that if the hot key needs to be released, when the function key is pressed. The user can select to press and hold the hot key or release the hot key, according to his/her habit or for convenience. Thus, when the function key is pressed, the hot key may be in a pressed state or a released state.

In a feasible embodiment, if the hot key is pressed and hold, when the first function key is pressed, the keyboard 410 still can output a first function key scan signal. In another feasible embodiment, when the first function key is pressed, the hot key has been released.

The control unit 420 obtains the type of the pressed keys according to the signal output from the keyboard 410. The control unit 420 is a keyboard controller or an embedded controller.

When the keyboard 410 outputs a hot key scan signal, the control unit 420 updates the data in the data field corresponding to the hot key scan signal. The number of the data field in the invention is not limited. Different hot key scan signals corresponding to different data fields. In the embodiment, the data in the data field represents the times that the hot key has been pressed. And, the original data in the data field can be 0 or the other value.

After received the hot key scan signal, if the keyboard 410 outputs a first function key scan signal, the control unit 420 outputs a key code according to the data in the data field and the first function key scan signal. The method of control unit 420 for searching a key code can be in accordance with the method shown in FIGS. 3A to 3C.

Further, if a reset function is inactivated, when the hot key and the first function key are pressed, and if a second function key is also pressed, the keyboard 410 may output a second function key scan signal. The control unit 420 may output a first and second function key code (such as keycode 11 and keycode 22) according to the data in the data field, the first and second function key scan signals.

Reversely, if the reset function is activated, when the hot key and the first function key are pressed, and if a second function key is also pressed, the keyboard 410 also outputs a second function key scan signal. However, the control unit 420 outputs only a first function key code (such as keycode 11) according to the data in the data field and the first function key scan signal. For the second function key scan signal, the control unit 420 should not combine the hot key scan signal and the second function scan signal.

When the terminal unit 430 receives the key code, it sends an interrupt command (e.g., SCI or SMI) to interrupt a currently executed process. In the interrupt period, the processing system 440 executes a service process (e.g., increase/decrease screen brightness, or increase/reduce speaker volume) according to the received key code. In the embodiment, the terminal unit 430 includes a south-bridge chip. The south-bridge chip (not shown) generates an interrupt command SCI, SMI or IRP.

## Claims

1. A control method, adopted to a keyboard including at least one first function key, at least one second function key, at least one hot key, wherein no response is triggered when the hot key is pressed singly, and a response and a specific function is triggered when the first function key or the second function key are being pressed singly representing the keys; the control method comprising the following steps:
judging if the hot key is pressed (S110, S130);
updating a data in a data field when the hot key is pressed (S120), wherein the data in the data field represents the times that the hot key has been pressed, and original data of the data field is set to zero;
judging if a first function key is pressed (S140);
when the first function key is pressed, outputting a first key code according to the data in the data field and the first function key (S150);
executing a first service process according to the first key code (S160);
wherein the first key code is output by a control unit (420), a terminal unit (430) executing the first service process according to the first key code and sending an interrupt command, and a processing system (440) executing the first service process in an interrupt period of the interrupt command;
wherein the control method is **characterized in that** further comprising
judging if a reset function is activated to reset the data in the data field to be the original data (S210);
if the reset function is inactivated when the first function key is pressed, judging if a second function key is pressed (S220);
if the second function key is pressed, outputting a second key code according to the data in the data field and the second function key (S230);
executing a second service process according to the second key code (S240); and
if the reset function is activated (S211), when the second function key is pressed after the first function key is pressed, the second service process is not executed;
wherein the user can decide if activating the reset function in function options of BIOS.

2. The control method as claimed in claim 1, wherein the interrupt command is a system control interrupt (SCI) or a system management interrupt.

3. The control method as claimed in claim 1, wherein when the function key is pressed, the hot key is also pressed.

4. The control method as claimed in claim 1, wherein the hot key is released when the function key is pressed.

5. A control system (400), comprising:
a keyboard(410), including at least one first function key, at least one second function key, at least one hot key, wherein no response is triggered when the hot key is pressed singly, and a response and a specific function is triggered when the first function key or the second function key are being pressed singly representing the keys; and when the hot key is pressed, the keyboard (410) outputs a hot key scan signal, further when the first function key is pressed, the keyboard (410) outputs a first function key scan signal;
a control unit (420) receiving the hot key scan signal and the first function key scan signal, so that the control unit (420) updates a data in a data field when the keyboard (410) outputs the hot key scan signal, and when the keyboard (410) outputs the first function key scan signal after the hot key scan signal then the control unit (420) outputs a first key code according to the data in the data field and the first function key scan signal; wherein the data in the data field represents the times that the hot key has been pressed, and original data of the data field is set to zero;
a terminal unit (430) generating an interrupt command when the terminal unit (430) receives the first key code; and
a processing system (440) executing a first service process according to the first key code when the processing system (440) obtains the interrupt command;
wherein the control system (400) is **characterized in that**
the control unit (420) further judges if a reset function is activated to reset the data in the data field to be the original data;
if the reset function is inactivated when the hot key and the first function key are pressed, and if a second function key is also pressed, the keyboard (410) also outputs a second function key scan signal and the control unit (420) outputs the first key code and the second key code according to the data in the data field, the first function key, and the second function key; and
if the reset function is activated when the hot key and the first function key are pressed, and if the second function key is also pressed, the keyboard (410) also outputs the second function key scan signal and the control unit (420) only outputs the first key code according to the data in the data field and the first function key;
wherein the user can decide if activating the reset function in function options of BIOS.

6. The control system (400) as claimed in claim 5, wherein the control unit (420) is a keyboard controller or an embedded controller.

7. The control system (400) as claimed in claim 5, wherein the terminal unit (430) includes a south-bridge chip, the south-bridge chip generating the interrupt command, the interrupt command being a system control interrupt or a system management interrupt.

8. The control system(400) as claimed in claim 5, wherein when the hot key is pressed and held, if the function key is pressed, the keyboard(410) still outputting the function key scan signal.

9. The control system (400) as claimed in claim 5, wherein the hot key is released when the function key is pressed.

## Patentansprüche

1. Steuerungsverfahren, angepasst an eine Tastatur einschließlich wenigstens einer ersten Funktionstaste, wenigstens einer zweiten Funktionstaste, wenigstens einem Hotkey, wobei keine Reaktion ausgelöst wird, wenn der Hotkey alleine gedrückt wird, und wobei eine Reaktion und eine spezifische Funktion ausgelöst wird, wenn die erste Funktionstaste oder die zweite Funktionstaste einzeln gedrückt werden, die Tasten repräsentierend;
wobei das Steuerungsverfahren die folgenden Schritte umfasst:
Beurteilen, ob der Hotkey gedrückt wird (S110, S130);
Aktualisieren von Daten in einem Datenfeld, wenn der Hotkey gedrückt wird (S120), wobei die Daten in dem Datenfeld die Anzahl repräsentieren, wie oft der Hotkey gedrückt wurde und ursprüngliche Daten des Datenfelds auf null eingestellt sind;
Beurteilen, ob eine erste Funktionstaste gedrückt wird (S140);
wenn die erste Funktionstaste gedrückt wird, Ausgeben eines ersten Tastencodes gemäß den Daten im Datenfeld und der ersten Funktionstaste (S150);
Ausführen eines ersten Dienstprozesses gemäß dem ersten Tastencode (S160);
wobei der erste Tastencode von einer Steuerungseinheit (420) ausgegeben wird, wobei eine Terminaleinheit (430) den ersten Dienstprozess gemäß dem ersten Tastencode ausführt und einen Unterbrechungsbefehl sendet, und wobei ein Verarbeitungssystem (440) den ersten Dienstprozess während einer Unterbrechungsdauer des Unterbrechungsbefehls ausführt;
wobei das Steuerungsverfahren **dadurch gekennzeichnet ist, dass** es weiterhin umfasst:
Beurteilen, ob eine Rücksetzfunktion aktiviert ist, um die Daten in dem Datenfeld zurückzusetzten, so dass diese den originalen Daten entsprechen (S210);
falls die Rücksetzfunktion deaktiviert ist, wenn die erste Funktionstaste gedrückt wird, Beurteilen, ob eine zweite Funktionstaste gedrückt wird (S220);
falls die zweite Funktionstaste gedrückt wird, Ausgeben eines zweiten Tastencodes gemäß den Daten im Datenfeld und der zweiten Funktionstaste (S230);
Ausführen eines zweiten Dienstprozesses gemäß dem zweiten Tastencode (S240); und
falls die Rücksetzfunktion aktiviert ist (S211), wenn nach dem Drücken der ersten Funktionstaste die zweite Funktionstaste gedrückt wird, der zweite Dienstprozess nicht ausgeführt wird;
wobei der Benutzer entscheiden kann, ob die Rücksetzfunktion in den Funktionsoptionen des BIOS aktiviert wird.

2. Steuerungsverfahren gemäß Anspruch 1, wobei der Unterbrechungsbefehl ein Systemsteuerungsunterbrechung (SCI) oder eine Systemverwaltungsunterbrechung ist.

3. Steuerungsverfahren gemäß Anspruch 1, wobei, wenn die Funktionstaste gedrückt wird, auch der Hotkey gedrückt wird.

4. Steuerungsverfahren gemäß Anspruch 1, wobei der Hotkey losgelassen wird, wenn die erste Funktionstaste gedrückt wird.

5. Steuerungssystem (400), umfassend:
eine Tastatur (410), die wenigstens eine erste Funktionstaste, wenigstens eine zweite Funktionstaste und wenigstens einen Hotkey enthält, wobei keine Reaktion ausgelöst wird, wenn der Hotkey alleine gedrückt wird, und wobei eine Reaktion und eine spezifische Funktion ausgelöst wird, wenn die erste Funktionstaste oder die zweite Funktionstaste einzeln gedrückt werden, die Tasten repräsentierend; und
wenn der Hotkey gedrückt wird, das Tastatur (410) ein Hotkey-Abtastsignal ausgibt und weiterhin, wenn die erste Funktionstaste gedrückt wird, die Tastatur (410) ein erstes Funktionstastenabtastsignal ausgibt;
eine Steuerungseinheit (420), die das Hotkey-Abtastsignal und das erste Funktionstastenabtastsignal empfängt, so dass die Steuerungseinheit (420) Daten in einem Datenfeld aktualisiert, wenn die Tastatur (410) das Hotkey-Abtastsignal ausgibt und wenn die Tastatur (410) das erste Funktionstastenabtastsignal nach dem Hotkey-Abtastsignal ausgibt, dann gibt die Steuerungseinheit (420) einen ersten Tastencode aus, gemäß den Daten in dem Datenfeld und dem Funktionstastenabtastsignal; wobei die Daten in dem Datenfeld die Anzahl repräsentieren, wie oft der Hotkey gedrückt wurde und ursprüngliche Daten des Datenfelds auf null eingestellt sind;
eine Terminaleinheit (430) die einen Unterbrechungsbefehl erzeugt, wenn die Terminaleinheit (430) den ersten Tastencode empfängt; und
ein Verarbeitungssystem (440), das einen ersten Dienstprozess gemäß dem ersten Tastencode ausführt, wenn das Verarbeitungssystem (440) den Unterbrechungsbefehl empfängt;
wobei das Steuerungssystem (400) **dadurch gekennzeichnet ist, dass**
die Steuerungseinheit (420) weiterhin beurteilt, ob eine Rücksetzfunktion aktiviert ist, um die Daten in dem Datenfeld auf die ursprünglichen Daten zurückzusetzen;
falls die Rücksetzfunktion deaktiviert ist, wenn der Hotkey und die erste Funktionstaste gedrückt werden, und falls eine zweite Funktionstaste ebenfalls gedrückt wird, die Tastatur (410) auch ein zweites Funktionstastenabtastsignal ausgibt und die Steuerungseinheit (420) den ersten Tastencode und den zweiten Tastencode gemäß den Daten im Datenfeld, der ersten Funktionstaste und der zweiten Funktionstaste ausgibt; und
falls die Rücksetzfunktion aktiviert ist, wenn der Hotkey und die erste Funktionstaste gedrückt werden, und falls eine zweite Funktionstaste ebenfalls gedrückt wird, die Tastatur (410) auch das zweite Funktionstastenabtastsignal ausgibt und die Steuerungseinheit (420) nur den ersten Tastencode gemäß den Daten im Datenfeld und der ersten Funktionstaste ausgibt;
wobei der Benutzer entscheiden kann, ob die Rücksetzfunktion in den Funktionsoptionen des BIOS aktiviert wird.

6. Steuerungssystem gemäß Anspruch 5, wobei die Steuerungseinheit (420) eine Tastatursteuerung oder eine eingebettete Steuerung ist.

7. Steuerungssystem gemäß Anspruch 5, wobei die Terminaleinheit (430) einen South-Bridge-Chip enthält, wobei der South-Bridge-Chip den Unterbrechungsbefehl erzeugt, wobei der Unterbrechungsbefehl eine Systemsteuerungsunterbrechung (SCI) oder eine Systemverwaltungsunterbrechung ist.

8. Steuerungssystem gemäß Anspruch 5, wobei, wenn der Hotkey gedrückt und gehalten wird und falls die Funktionstaste gedrückt ist, die Tastatur (410) dennoch das erste Funktionstastenabtastsignal ausgibt.

9. Steuerungssystem gemäß Anspruch 5, wobei der Hotkey losgelassen wird, wenn die Funktionstaste gedrückt wird.

## Revendications

1. Procédé de commande, adapté à un clavier incluant au moins une touche de fonction, au moins une seconde touche de fonction, au moins une touche de raccourci, dans lequel aucune réponse n'est déclenchée lorsque seule la touche de raccourci est pressée et une réponse et une fonction spécifique sont déclenchés lorsque seules la première touche de fonction ou la seconde touche de fonction sont pressées représentant les touches ;
le procédé de commande comprenant les étapes suivantes :
estimer si la touche de raccourci est pressée (S110, S130) ;
mettre à jour une donnée dans un champ de données lors que la touche de raccourci est pressée (S120), dans lequel la donnée dans le champ de données représente le nombre de fois où la touche de raccourci a été pressée et une donnée d'origine du champ de données est remise à zéro ;
estimer si une première touche de fonction est pressée (S140) ;
lorsque la première touche de fonction est pressée, émettre un premier code de touche selon la donnée dans le champ de données et la première touche de fonction (S150) ;
exécuter un premier processus de service conformément au premier code de touche (S160) ;
dans lequel le premier code de touche est émis par une unité de commande (420), une unité de terminal (430) exécutant le premier processus de service conformément au premier code de touche et envoyant une commande d'interruption et un système de traitement (440) exécutant le premier processus de service pendant une période d'interruption de la commande d'interruption ;
dans lequel le procédé de commande est **caractérisé en ce qu'**il comprend en outre de :
estimer si une fonction de réinitialisation est activée pour réinitialiser la donnée dans le champ de données afin qu'elle soit la données d'origine (S210) ;
si la fonction de réinitialisation est inactivée lorsque la première touche de fonction est pressée, estimer si une seconde touche de fonction est pressée (S220) ;
si la seconde touche de fonction est pressée, émettre un second code de touche conformément à la donnée dans le champ de données et à la seconde touche de fonction (S230) ;
exécuter un second processus de service conformément au second code de touche (S240) ; et
si la fonction de réinitialisation est activée (S211), lorsque la seconde touche de fonction est pressée après que la première touche de fonction est pressée, le second processus de service n'est pas exécuté ;
dans lequel l'utilisateur peut décider d'activer la fonction de réinitialisation dans les options de fonction du BIOS.

2. Procédé de commande selon la revendication 1, dans lequel la commande d'interruption est une interruption de commande de système (SCI) ou une interruption de gestion de système.

3. Procédé de commande selon la revendication 1, dans lequel lorsque la touche de fonction est pressée, la touche de raccourci est aussi pressée.

4. Procédé de commande selon la revendication 1, dans lequel la touche de raccourci est relâchée lorsque la touche de fonction est pressée.

5. Système de commande (400), comprenant :
un clavier (410) incluant au moins une touche de fonction, au moins une seconde touche de fonction, au moins une touche de raccourci, dans lequel aucune réponse n'est déclenchée lors que seule la touche de raccourci est pressée et une réponse et une fonction spécifique sont déclenchées lorsque seules la première touche de fonction ou la seconde touche de fonction sont pressées représentant les touches ; et
lorsque la touche de raccourci est pressée, le clavier (410) émet un signal de balayage de touche de raccourci, en outre lorsque la première touche de fonction est pressée, le clavier (410) émet un premier signal de balayage de touche de fonction ;
une unité de commande (420) recevant le signal de balayage de touche de raccourci et le premier signal de balayage de touche de fonction, de sorte que l'unité de commande (420) mette à jour une données dans un champ de données lorsque le clavier (410) émet le signal de balayage de touche de raccourci et lorsque le clavier (410) émet le premier signal de balayage de touche de fonction après le signal de balayage de touche de raccourci alors l'unité de commande (420) émet un premier code conformément aux données dans le champ de données et au premier signal de balayage de touche de fonction ; dans lequel les données dans le champ de données représentent le nombre de fois où la touche de raccourci a été pressée et une donnée d'origine du champ de données est remise à zéro ;
une unité de terminal (430) générant une commande d'interruption lorsque l'unité de terminal (430) reçoit le premier code de touche ; et
un système de traitement (440) exécutant un premier processus de service conformément au premier code de touche lorsque le système de traitement (440) obtient la commande d'interruption ;
dans lequel le système de commande (400) est **caractérisé en ce que**
l'unité de commande (420) estime en outre si une fonction de réinitialisation est activée pour réinitialiser les données dans le champ de données afin qu'elles soient les données d'origine ;
si la fonction de réinitialisation est inactivée lorsque la touche de raccourci et la première touche de fonction sont pressés et si une seconde touche de fonction est aussi pressée, le clavier (410) émet un signal de balayage de touche de fonction et l'unité de commande (420) émet le premier code de touche et le second code de touche conformément aux données dans le champ de données, à la première touche de fonction et à la seconde touche de fonction ; et
si la fonction de réinitialisation est activée lorsque la touche de raccourci et la première touche de fonction sont pressées et si la seconde touche est aussi pressée, le clavier (410) émet aussi le second signal de balayage de touche de fonction et l'unité de commande (420) émet seulement le premier code de touche conformément aux données dans le champ de données et à la première touche de fonction ;
dans lequel l'utilisateur peut décider d'activer la fonction de réinitialisation dans les options de fonction du BIOS.

6. Système de commande (400) selon la revendication 5, dans lequel l'unité de commande (420) est un contrôleur de clavier ou un contrôleur incorporé.

7. Système de commande (400) selon la revendication 5, dans lequel l'unité de terminal (430) inclut une puce de pont sud, la puce de pont sud générant la commande d'interruption, la commande d'interruption étant une interruption de commande du système ou une interruption de gestion du système.

8. Système de commande (400) selon la revendication 5, dans lequel lorsque la touche de raccourci est pressée durablement, si la touche de fonction est pressée, le clavier (410) émet toujours le signal de balayage de touche de fonction.

9. Système de commande (400) selon la revendication 5, dans lequel la touche de raccourci est relâchée lorsque la touche de fonction est pressée.
